# EUROPEAN PATENT SPECIFICATION

(11) **EP 3 258 310 B1**
(45) Date of publication and mention of the grant of the patent: **06.03.2019**
(21) Application number: 17175610.9
(22) Date of filing: 13.06.2017
(51) Int. Cl.: G02F 1/13357

(54) **DISPLAY DEVICE**
ANZEIGEVORRICHTUNG
DISPOSITIF D'AFFICHAGE

(30) Priority: 13.06.2016 KR 20160073339
(43) Date of publication of application: 20.12.2017
(73) Proprietor: Samsung Display Co., Ltd., Gyeonggi-do 17113 (KR)
(72) Inventor: Kang, Sungyong, 204-2404, Asan-si, Chungcheongnam-do (KR); Kim, Haksun, 13-903 Seoul (KR); Kang, Taegil, 132-2102 Hwaseong-si, Gyeonggi-do (KR)
(74) Representative: Dr. Weitzel & Partner

(56) References cited:
- JP-A- 2004 151 511
- KR-A- 20160 033 833
- US-A1- 2012 147 296

## Description

### BACKGROUND

### 1. Field

The present disclosure relates to a display device and a method of manufacturing the same. More particularly, the present disclosure relates to a display device from which a backlight unit is omitted and a method of manufacturing the display device.

### 2. Description of the Related Art

A flat panel display device has been developed to replace a cathode ray tube display device which has a relatively large thickness and relatively high power consumption. As the flat panel display device, an organic light emitting display device, a liquid crystal display device and a plasma display device are widely used.

In general, the liquid crystal display device is a non-self emissive display device and includes a display panel which generates an image with light and a backlight unit which is disposed under the display panel to provide the light to the display panel. The backlight unit occupies a significant portion of the total thickness of the liquid crystal display device.

The US patent application publication 2012/147296 discloses a liquid crystal display with a backlight with an edge-lit light guide plate and blue-emitting light sources. The device further comprises red and green phosphor and scattering patterns on the light guide plate, separated by air spaces defined by mirror structures which direct the incident light towards the phosphor or scattering patterns. The backlight is directly bonded to the bottom polarizer of the liquid crystal cell, the bottom liquid crystal cell substrate may be omitted.

The Korean patent application publication 10-2016-0033833 discloses a liquid crystal display with a backlight comprising an edge-lit light guide plate and a collimating inverted prism sheet between two resin substrates positioned on the light guide plate. There are air spaces between the ridges of the prisms and the lower resin substrate. The light guide plate, the collimating sheet and the liquid crystal panel are bonded by adhesive layers.

### SUMMARY

The invention provides a display device according to claim 1 having a reduced thickness and a reduced manufacturing cost.

Preferred embodiments of the invention are defined in the dependent claims.

According to the invention, an overall thickness and manufacturing cost of the display device may be reduced since the display device does not need to include a light guide plate and optical sheets as separate elements within the lower substrate to which light is incident.

### BRIEF DESCRIPTION OF THE DRAWINGS

The above and other advantages of the present disclosure will become readily apparent by reference to the following detailed description when considered in conjunction with the accompanying drawings where:
FIG. 1 is an exploded perspective view showing an exemplary embodiment of a display device according to the invention;
FIG. 2 is a top plan view of the display device in FIG. 1 according to the invention;
FIG. 3 is a cross-sectional view taken along line I-I' of FIG. 2;
FIG. 4 is a perspective view showing an exemplary embodiment of a first substrate and light exit patterns;
FIG. 5 is a cross-sectional view showing the first substrate and light exit patterns of FIG. 4 according to the invention;
FIG. 6 is a cross-sectional view showing a modified exemplary embodiment of the display device in FIG. 3 according to the invention;
FIG. 7 is a cross-sectional view showing another modified exemplary embodiment of the display device of FIG. 3 according to the invention;
FIG. 8 is a cross-sectional view showing still another modified exemplary embodiment of the display device of FIG. 3 according to the invention;
FIG. 9 is a cross-sectional view showing another exemplary embodiment of a display device taken along line I-I' of FIG. 2 according to the invention;
FIG. 10 is a cross-sectional view showing still another exemplary embodiment of a display device according to the invention;
FIG. 11 is a flowchart showing an exemplary embodiment of a manufacturing method of a display device according to the invention;
FIGS. 12A to 12C are cross-sectional views of exemplary embodiments of processes of forming light exit patterns of a first substrate according to the invention; and
FIG. 13 is a cross-sectional view showing an exemplary embodiment of a process of forming auxiliary patterns of a first substrate according to the invention.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. Like reference numerals refer to like elements throughout.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

The terminology used herein is for the purpose of describing particular embodiments only and is not intended to be limiting. As used herein, the singular forms "a," "an," and "the" are intended to include the plural forms, including "at least one," unless the content clearly indicates otherwise. "At least one" is not to be construed as limiting "a" or "an." "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10% or 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

Hereinafter, the invention will be explained in detail with reference to the accompanying drawings.

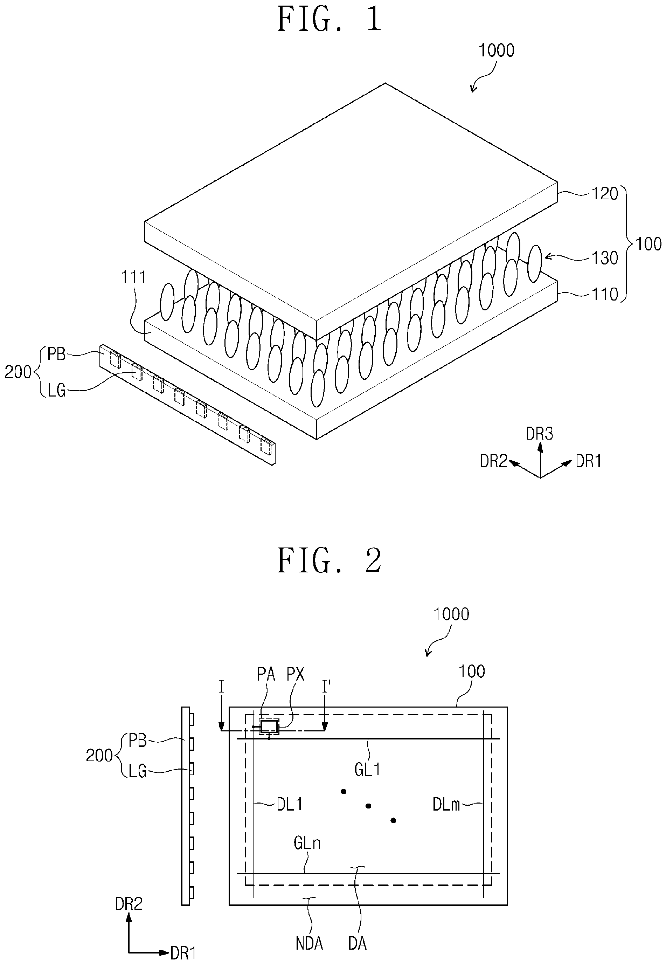

FIG. 1 is an exploded perspective view showing an exemplary embodiment of a display device 1000 according to the invention, and FIG. 2 is a top plan view showing the display device of FIG. 1.

Referring to FIGS. 1 and 2, the display device 1000 includes a display panel 100 and a light source unit 200.

The display panel 100 generates and displays an image using a light emitted from the light source unit 200. The display panel 100 may be a liquid crystal display panel, an electrophoretic display panel or an electrowetting display panel, but the invention is not limited thereto. Hereinafter, the liquid crystal display panel will be described as the display panel 100.

The display panel 100 includes a lower (display) substrate 110, an upper (display) substrate 120, and an optical medium layer 130. Where the liquid crystal display panel is described as the display panel 100, the optical medium layer is a liquid crystal layer 130.

The lower substrate 110 faces the upper substrate 120. The image displayed by the display panel 100 is perceived by a user through the upper substrate 120. The liquid crystal layer 130 is interposed between the lower substrate 110 and the upper substrate 120. The lower substrate 110 includes or defines an upper surface thereof facing the upper substrate 120, a lower surface thereof opposite to the upper surface, and side surfaces each connecting the upper and lower surfaces to each other. The upper substrate 120 may have a similar configuration. Each of the upper and lower substrates 110 and 120 may include or define four side surfaces thereof.

The display panel 100 includes two sides defining lengths thereof extending in a first direction DR1 and two sides defining lengths thereof extending in a second direction DR2 crossing the first direction DR1, when viewed in the top plan view. In the following embodiments, long (e.g., length) sides of the display panel 100 extend in the first direction DR1 and short (e.g., width) sides of the display panel 100 extend in the second direction DR2. In addition, a thickness direction of the display panel 100 is referred to as a "third direction DR3." The first, second and third directions DR1, DR2 and DR3 may be perpendicular to each other, but the invention should not be limited thereto or thereby.

The display panel 100 includes or defines a display area DA and a non-display area NDA when viewed in the top plan view. The display area DA is an area where the image is displayed, and the non-display area NDA is an area where no image is displayed.

The display panel 100 includes gate lines GL1 to GLn, data lines DL1 to DLm, and a pixel PX provided in plurality. The gate lines GL1 to GLn are insulated from the data lines DL1 to DLm while crossing the data lines DL1 to DLm. In FIG. 2, each of the gate lines GL1 to GLn defines a length thereof which extends in the first direction DR1, and each of the data lines DL1 to DLm defines a length thereof which extends in the second direction DR2, but the invention should not be limited thereto or thereby. In an alternative exemplary embodiment of the top plan view of the display device 1000, for instance, each of the gate lines GL1 to GLn may have a curved shape at a portion thereof instead of having a total straight line shape, and each of the data lines DL1 to DLm may have a curved shape at a portion thereof instead of having a total straight line shape. In an exemplary embodiment, the gate lines GL1 to GLn and the data lines DL1 to DLm may respectively define a pixel area PA provided in plurality, but the invention should not be limited thereto or thereby. The pixel area PA may be a display unit of the display device 1000 which generates and displays the image.

The pixels PX are arranged in the pixel areas PA, respectively. Each of the pixels PX is connected to a gate line among the gate lines GL1 to GLn and a data line among the data lines DL1 to DLm to display the image. Each of the pixels PX may display one of red, green and blue colors, but the invention should not be limited thereto or thereby. That is, each of the pixels PX may display another color, e.g., a white color, other than the red, green and blue colors. In FIG. 1, each of the pixels PX has a quadrangular shape in the top plan view, but the planar shape of the pixels PX should not be limited to the quadrangular shape. Each of the pixels PX may have various shapes, such as a polygonal shape, a circular shape, an oval shape, etc. in the top plan view.

The light source unit 200 is disposed adjacent to a side surface 111 of the lower substrate 110. The light source unit 200 includes a light source LG provided in plurality and a driving circuit board PB. The light sources LG are mounted on the driving circuit board PB. Each of the light sources LG may be, but not limited to, a light emitting diode package. Each of the light sources LG receives a source voltage from the driving circuit board PB to generate the light.

The light generated from the light sources LG travels toward the side surface 111 of the lower substrate 110.

The light sources LG are arranged along the side surface 111 of the lower substrate 110. The light sources LG are spaced apart from each other in the second direction DR2.

According to another exemplary embodiment of the present disclosure, the light source unit 200 may be provided in a plural number within the display device 1000, and the light source units may be disposed adjacent to two or more side surfaces among the four side surfaces of the lower substrate 110, respectively.

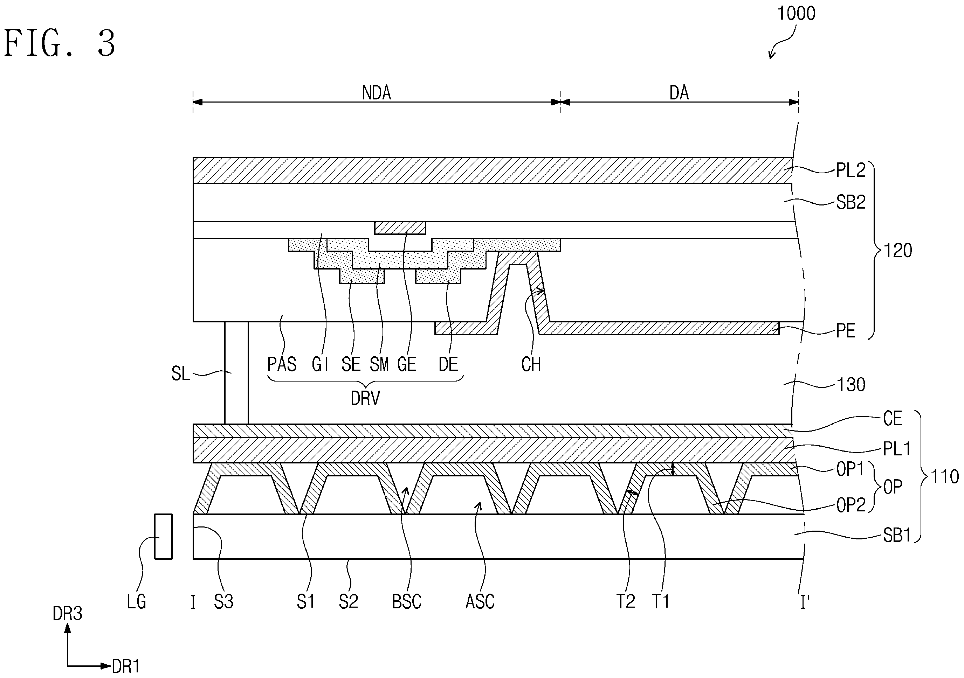

FIG. 3 is a cross-sectional view taken along line I-I' of FIG. 2. Particularly, FIG. 3 shows an exemplary embodiment of the display panel 100 and the light source LG of the display device 1000.

Referring to FIG. 3, the lower substrate 110 includes a first (base) substrate SB1, a light exit pattern OP provided in plurality, a first polarization layer PL1, and a common electrode CE. The plurality of light exit patterns OP may be referred to as a light exit pattern layer.

The first substrate SB1 is a transparent substrate, such as a glass substrate, a plastic substrate, a silicon substrate, etc. The first substrate SB1 includes or defines an upper surface S1, a lower surface S2 and an incident surface S3. The incident surface S3 is connected to the upper surface S1 and the lower surface S2.

The light source LG is disposed adjacent to the incident surface S3 of the first substrate SB1 in the first direction DR1. The light emitted from the light source LG is incident to the incident surface S3 of the first substrate SB1. The first substrate SB1 has a refractive index of about 1.5.

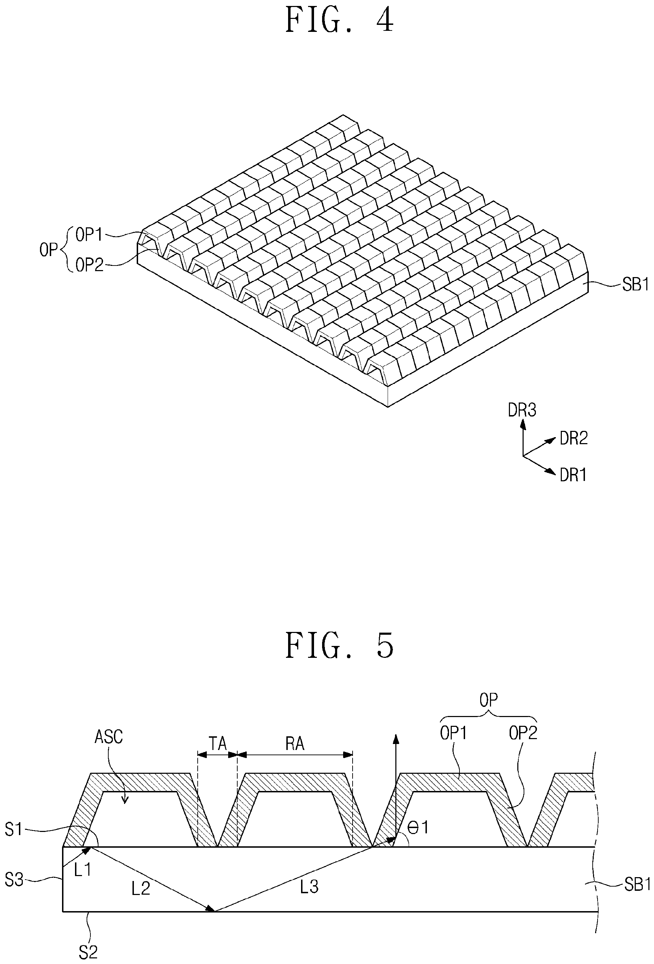

FIG. 4 is a perspective view showing an exemplary embodiment of the first substrate SB1 and the light exit patterns OP.

Referring to FIGS. 3 and 4, the light exit patterns OP are disposed on the first substrate SB1. Each of the light exit patterns OP provides a first space ASC defined therein. The first space ASC may be filled with air.

Each of the light exit patterns OP includes a flat portion OP1 and an inclined portion OP2 provided in plural. The flat portion OP1 is flat. The flat portion OP1 is arranged parallel to and spaced apart from the first substrate SB1. A plane of the flat portion OP1 may be defined in the first and second directions DR1 and DR2, and the plane may be parallel to the upper surface of the first substrate SB1. In the illustrated exemplary embodiment, the flat portion OP1 has a quadrangular shape when viewed in the top plan view.

The inclined portions OP2 respectively extend from the flat portion OP1. The light exit pattern OP may include a pair of inclined portions OP2 with respect to one flat portion OP1, but the invention should not be limited thereto or thereby. The inclined portions OP2 are respectively connected to two sides of the flat portion OP1 which oppose each other in the first direction DR1 with respect to the flat portion OP1. The inclined portions OP2 make contact with the first substrate SB1. Distal ends of the inclined portions OP2 make contact with the first substrate SB1. The inclined portions OP2 are disposed to be inclined with respect to the first substrate SB1. One of the flat portion OP1 and the inclined portions OP2 may be considered as extending to define the other one of the flat portion OP1 and the inclined portions OP2.

The first space ASC is surrounded by the flat portion OP1, the pair of inclined portions OP2 extended from the flat portion OP1, and the first substrate SB1. The first space ASC has a trapezoidal shape when viewed in a plane defined by the first direction DR1 and the third direction DR3.

In the illustrated exemplary embodiment, the first space ASC may be extended to penetrate the light exit patterns OP in the second direction DR2.

In the illustrated exemplary embodiment, light exit patterns OP may be adjacent to each other in the first direction DR1. Among a first and second light exit pattern OP adjacent to each other in the first direction DR1, an inclined portion OP2 of light exit pattern OP may make contact with an inclined portion OP2 of the other light exit pattern OP.

The flat portion OP1 has a thickness T1 that is equal to a thickness T2 of each of the inclined portions OP2. The thicknesses T1 and T2 may be taken in a direction normal to an inner surface of the light exit pattern OP and/or to an outer surface of the light exit pattern OP which is opposite to an inner surface thereof at the first space ASC.

The light exit patterns OP include a transparent material. The light exit patterns OP have a refractive index equal to or greater than the refractive index of the first substrate SB1. In the illustrated exemplary embodiment, the light exit patterns OP have the refractive index of about 1.5. The light exit patterns OP include a silicon nitride layer or a silicon oxide layer.

Referring to FIG. 3 again, the first polarization layer PL1 is disposed on the light exit patterns OP.

The first polarization layer PL1 linearly polarizes the light incident thereto. The first polarization layer PL1 may be a wire-grid polarization plate ("WGP"). Although not shown in figures, the first polarization layer PL1 may include a base layer, a wire grid pattern and an insulating layer. The base layer, the wire grid pattern and the insulating layer may be sequentially stacked on the light exit patterns OP. The wire grid pattern includes a metal material and extends parallel to a plane surface defined by the first direction DR1 and the second direction DR2. The insulating layer covers the wire grid pattern.

The first polarization layer PL1 has a refractive index equal to or greater than the refractive index of the light exit patterns OP.

In the illustrated exemplary embodiment, a second space BSC may be provided between the first polarization layer PL1 and the light exit patterns OP. In detail, the second space BSC may be a space surrounded by the inclined portions OP2 and the first polarization layer PL1. The second space BSC may be filled with air.

The common electrode CE is disposed on the first polarization layer PL1. The common electrode CE includes a transparent electrode. The common electrode CE receives a common voltage having a constant level.

Although not shown in figures, the lower substrate 110 may further include a reflection layer disposed under the first substrate SB1. The reflection layer reflects the light incident thereto from the first substrate SB1 toward the light exit patterns OP.

The upper substrate 120 includes a second substrate SB2, a driving layer (or element) DRV, a pixel electrode PE and a second polarization layer PL2.

The second substrate SB2 may be a transparent substrate, such as a glass substrate, a plastic substrate, a silicon substrate, etc.

The driving layer DRV includes a gate electrode GE, a gate insulating layer GI, a semiconductor pattern SM, a first source-drain electrode SE, a second source-drain electrode DE and a passivation layer PAS.

In the non-display area NDA, the gate electrode GE is disposed on the second substrate SB2. The gate insulating layer GI is disposed on the gate electrode GE. The gate insulating layer GI includes an organic insulating material or an inorganic insulating material. The semiconductor pattern SM is disposed on the gate insulating layer GI to overlap with the gate electrode GE. The first source-drain electrode SE is connected to one end of the semiconductor pattern SM, and the second source-drain electrode DE is connected to an opposing end of the semiconductor pattern SM.

The passivation layer PAS is disposed on the first source-drain electrode SE and the second source-drain electrode DE in the non-display area NDA. The passivation layer PAS may include an organic insulating material or an inorganic insulating material, but should not be limited thereto or thereby. In the illustrated exemplary embodiment, the passivation layer PAS may include a black matrix (not shown) and a color filter (not shown). Referring to FIG. 3, the passivation layer PAS as the color filter is disposed to overlap with the pixel electrode PE in the display area DA and assigns a color to the light incident thereto. the passivation layer PAS as the black matrix is disposed to overlap with the gate electrode GE, the first source-drain electrode SE and the second source-drain electrode DE in the non-display area NDA, and disposed to overlap the gate lines GL1 to GLn and the data lines DL1 to DLm in the display area DA (refer to FIG. 2), and blocks the light incident thereto. The passivation layer PAS disposed in one of the display area DA and the non-display area NDA may extend in the first and/or second directions to define the passivation layer PAS disposed in the other one of the display area DA and the non-display area NDA.

The passivation layer PAS includes a contact hole CH defined therethrough to expose a portion of the second source-drain electrode DE.

The pixel electrode PE is disposed on the passivation layer PAS and connected to the second source-drain electrode DE at the contact hole CH. The pixel electrode PE receives a pixel voltage from the second source-drain electrode DE in the display area DA. The pixel electrode PE is disposed in both the display area DA and the non-display area NDA, such that the pixel voltage received at the non-display area NDA may be transmitted to the display area DA.

The second polarization layer PL2 is disposed to face the pixel electrode PE such that the second substrate SB2 is disposed between the second polarization layer PL2 and the pixel electrode PE within the upper substrate 120.

The second polarization layer PL2 linearly polarizes the light incident thereto. The first polarization layer PL1 has a transmission axis (or an absorption axis) substantially perpendicular to a transmission axis (or an absorption axis) of the second polarization layer PL2. The first polarization layer PL1 may be provided in a film shape, and the first polarization layer PL1 may be a wire-grid polarization plate.

The liquid crystal layer 130 as the optical medium layer includes a plurality of liquid crystal molecules. An alignment state of the liquid crystal molecules is changed due to an electric field generated by the pixel electrode PE and the common electrode CE, thereby controlling a transmittance of the light traveling through the liquid crystal layer 130.

The display device 1000 may further include a sealing member SL. The sealing member SL may seal the liquid crystal layer 130 in cooperation with the lower substrate 110 and the upper substrate 120. In addition, the sealing member SL maintains a distance between the lower substrate 110 and the upper substrate 120 in the thickness direction DR3.

FIG. 5 is a cross-sectional view showing the first substrate and the light exit patterns of FIG. 4 according to the invention.

Hereinafter, a path of the light incident to the incident surface S3 of the first substrate SB1 will be described with reference to FIG. 5.

The first substrate SB1 includes a transmission area TA and a reflection area RA each defined at the upper surface S1 thereof and provided in plural across the upper surface S1.

The transmission area TA may correspond to an area where the inclined portions OP2 of the light exit patterns OP make contact with the upper surface S1 of the first substrate SB1. The reflection area RA may correspond to an area where the first substrate SB1 makes contact with the first space ASC or is exposed at the first space ASC.

Among the light incident to the incident surface S3 of the first substrate SB1, a light L1 is incident to an inner area of the first substrate SB1 from the light source LG and travels within the first substrate SB1. The light L1 incident to the reflection area RA may be totally reflected due to a difference in refractive index between the first substrate SB1 and the air within the first space ASC. Light may not be transmitted at the reflection area RA. A reflected light L2 which travels within the first substrate SB1 to be incident to the lower surface S2 of the first substrate SB1 may be further reflected. Where the lower surface S2 of the first substrate SB1 makes contact with the air, the light L2 incident to the lower surface S2 of the first substrate SB1 may be totally reflected. Also, with the reflection layer disposed on the lower surface S2 of the first substrate SB1, the reflected light L2 incident to the lower surface S2 of the first substrate SB1 may be reflected by the reflection layer to further travel within the first substrate SB1.

Since the light exit pattern OP has a similar refractive index as that of the first substrate SB1, a reflected light L3 passes through the first substrate SB1 to be incident to the transmission area TA. The reflected light L3 incident to the transmission area TA is totally reflected by the inclined portions OP2 of the light exit pattern OP and travels upward in a direction away from the light exit pattern OP. Light may not be reflected at the transmission area TA.

An inner angle θ1 defined in the light exit patterns OP among inclination angles formed between the inclined portions OP2 and the first substrate SB1 may be in a range from about 60° to about 70°. A front exit angle of a light exiting to the outside of the light exit patterns OP may become closer to 0° depending on the inclination angles of the inclined portions OP2. The front exit angle may be defined by an angle formed between a direction in which the light travels and a direction perpendicular to the first substrate SB1.

As illustrated in FIG. 5, the light guided inside the first substrate SB1 finally exits from the first substrate SB1 in a direction away from the first substrate SB1 through the light exit patterns OP. In addition, the light exit patterns OP control the front exit angle of the light exiting to the outside of the first substrate SB1 to become closer to about 0°, and thus the light exit patterns OP may replace an optical sheet of a conventional display device.

One or more exemplary embodiment of the display device 1000 according to the invention does not include a light guide plate and optical sheets of the conventional display device. Thus, an overall thickness of the display device 1000 may be reduced and a manufacturing cost of the display device 1000 may be reduced as compared to the thickness and cost of the convention display device,.

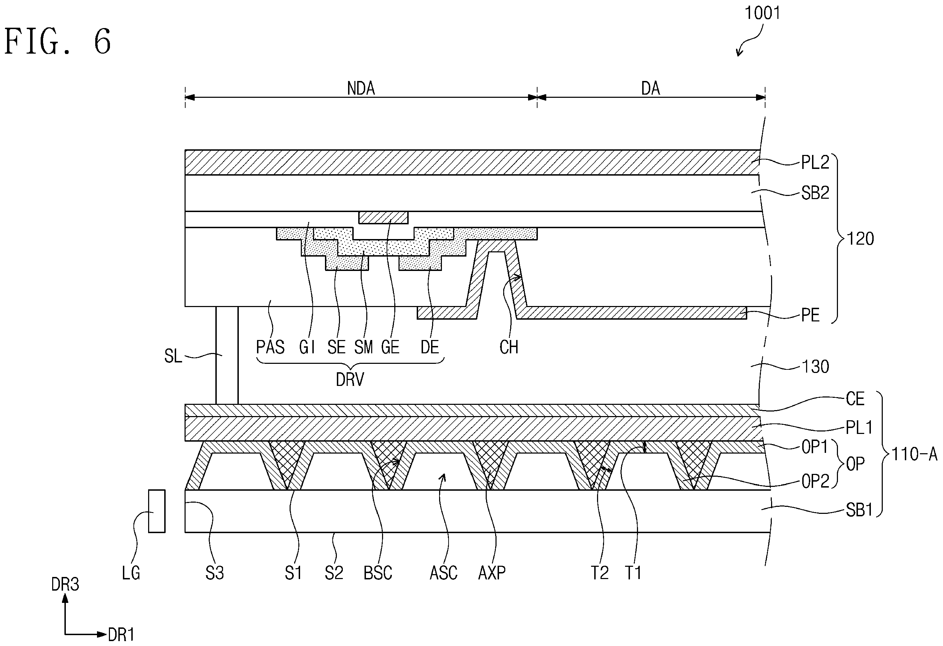

FIG. 6 is a cross-sectional view showing a modified exemplary embodiment of a display device 1001 according to the invention.

The display device 1001 shown in FIG. 6 has substantially the same structure and function as those elements of the display device 1000 shown in FIG. 3 except for an auxiliary pattern AXP.

A lower substrate 110-A may further include the auxiliary pattern AXP provided in plural. The auxiliary patterns AXP are disposed in a second space BSC. The auxiliary patterns AXP make contact with inclined portions OP2 of light exit patterns OP at the second space BSC.

The auxiliary patterns AXP include a transparent material. The auxiliary patterns AXP have a refractive index equal to or greater than a refractive index of a first substrate SB1. The auxiliary patterns AXP and the light exit patterns OP may have substantially the same refractive index. In the illustrated exemplary embodiment, the refractive index of the auxiliary patterns AXP is about 1.5. The auxiliary patterns AXP include a silicon nitride layer or a silicon oxide layer. The refractive indices of these elements may be defined by the material thereof.

The auxiliary patterns AXP and the light exit patterns OP allow the light guided within the first substrate SB1 to travel upward in a direction away from the first substrate SB1. Among lights guided by the inclined portions OP2 of the light exit patterns OP, a light incident to an interface between the second space BSC and the inclined portions OP2 passes through the auxiliary patterns AXP and exits upward above from the auxiliary patterns AXP without being totally reflected.

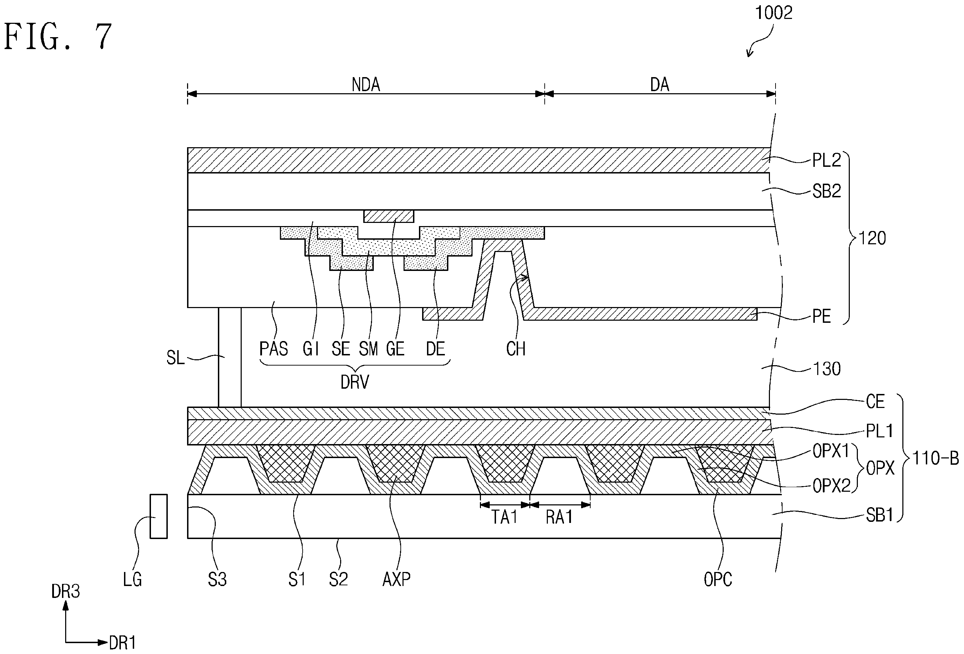

FIG. 7 is a cross-sectional view showing another modified exemplary embodiment of a display device 1002 according to the invention.

The display device 1002 shown in FIG. 7 has substantially the same structure and function as those elements of the display device 1000 shown in FIG. 3 except for a light exit pattern OPX and a connection pattern OPC.

The light exit pattern OPX and the connection pattern OPC are provided in plural on the first substrates SB1. Each of the light exit patterns OPX includes a flat portion OPX1 and inclined portions OPX2 which are respectively connected to ends of the flat portion OPX1. The flat portion OPX1 is the same as the flat portion OP1 described with reference to FIGS. 1 to 5, and thus detailed descriptions on the flat portion OPX1 will be omitted.

In the illustrated exemplary embodiment, light exit patterns OPX may be adjacent to each other in the first direction DR1. Among a first and second light exit pattern OPX adjacent to each other in the first direction DR1, the inclined portions OPX2 of the first and second light exit patterns OPX may be spaced apart from each other in the first direction DR1. The other features of the inclined portions OPX2 are the same as those of the inclined portions OP2 described with reference to FIGS. 1 to 5, and thus detailed descriptions thereof will be omitted.

A lower substrate 110-B may further include the connection patterns OPC. The connection patterns OPC respectively connect inclined portions OPX2 of the first and second light exit patterns OPX to each other. In the thickness direction DR3, the connection patterns OPC are disposed to be closer to a first substrate SB1 than the flat portion OPX1. The connection patterns OPC make contact with the first substrate SB1. When viewed in the top plan view, the connection patterns OPC may not be overlapped with the flat portion OPX1.

The connection patterns OPC may include the same material as the light exit patterns OPX. The light exit patterns OPX and the connection patterns OPC may have an integrally formed shaped. That is, one among the connection pattern OPC, the flat portion OPX1 and the inclined portion OPX2 may extend to define one or all of the remaining among the connection pattern OPC, the flat portion OPX1 and the inclined portion OPX2.

In FIG. 7, labels TA1 and RA1 are respectively used to indicate boundaries of a transmission area and a reflection area, and to indicate dimensions of the transmission area and the reflection area in the first direction DR1. According to the display device 1002 shown in FIG. 7, a ratio (TA1:RA1) of the dimension of the transmission area TA1 to the dimension of the reflection area RA1 may be set freely to allow the light exit patterns OPX and the connection patterns OPC to make contact with the first substrate SB1 and to vary a length of the connection patterns OPC in the first direction DR1.

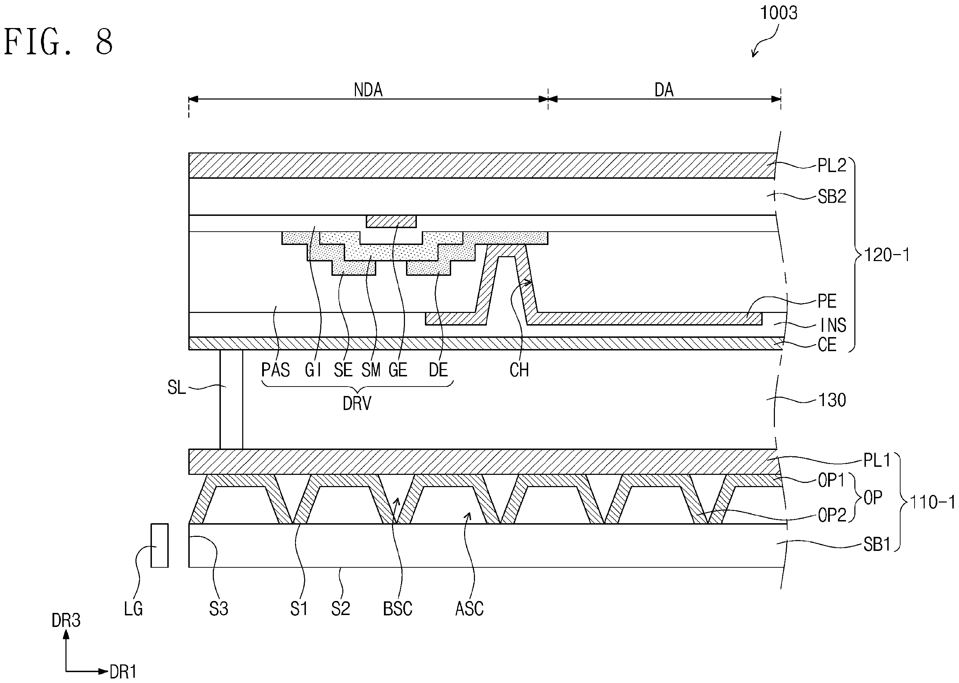

FIG. 8 is a cross-sectional view showing still another modified exemplary embodiment of a display device 1003 according to the invention.

The display device 1003 shown in FIG. 8 has substantially the same structure and function as those elements of the display device 1000 shown in FIG. 3 except for a position of a common electrode CE.

The common electrode CE may be included in an upper substrate 120-1 without being included in a lower substrate 110-1. The common electrode CE is disposed to face a pixel electrode PE within the upper substrate 120-1. An insulating layer INS of the upper substrate 120-1 is disposed between the common electrode CE and the pixel electrode PE to insulate the common electrode CE from the pixel electrode PE.

Referring to FIG. 8, the pixel electrode PE is disposed between a second substrate SB2 and the common electrode CE, but should not be limited thereto or thereby. According to another exemplary embodiment, the common electrode CE may be disposed between the second substrate SB2 and the pixel electrode PE.

A horizontal electric field may be formed in a liquid crystal layer 130 by voltages respectively applied to the pixel electrode PE and the common electrode CE of the upper substrate 120-1. An alignment state of liquid crystal molecules in the liquid crystal layer 130 may be controlled by the horizontal electric field.

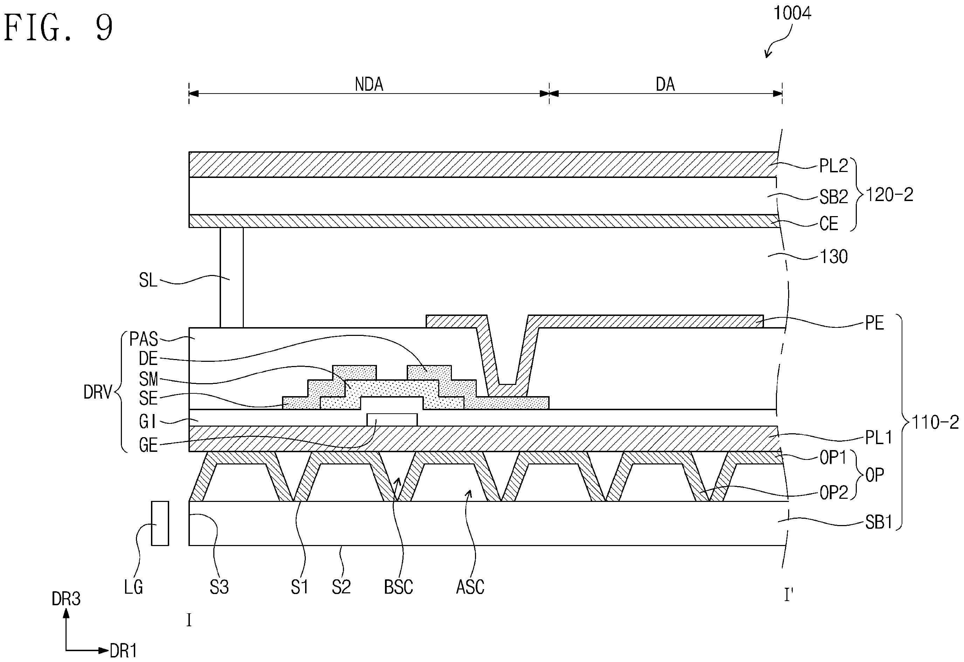

FIG. 9 is a cross-sectional view showing another exemplary embodiment of a display device 1004 taken along line I-I' of FIG. 2 according to the invention.

The display device 1004 shown in FIG. 9 has substantially the same structure and function as those elements of the display device 1000 shown in FIG. 3 except for a structure of a lower substrate 110-2 and an upper substrate 120-2.

The lower substrate 110-2 includes a first substrate SB1, light exit patterns OP, a first polarization layer PL1, a driving layer DRV and a pixel electrode PE.

The driving layer DRV is disposed on the first polarization layer PL1. The pixel electrode PE is disposed on the driving layer DRV.

The upper substrate 120-2 includes a second substrate SB2, a common electrode CE, and a second polarization layer PL2. The common electrode CE is disposed on the second substrate SB2 to face the pixel electrode PE with respect to the liquid crystal layer 130. The second substrate SB2 is disposed between the common electrode CE and the second polarization layer PL2.

However, the invention should not be limited thereto or thereby. In an alternative exemplary embodiment, for instance, the common electrode CE may be included in the lower substrate 110-2 without being included in the upper substrate 120-2. Where the common electrode CE and the pixel electrode PE are included in the lower substrate 110-2, similar to that discussed for FIG. 8, an insulating layer (not shown) may be disposed on the pixel electrode PE, and the common electrode CE may be disposed on the insulating layer (not shown).

In other alternative exemplary embodiments, any of the varying structures of the auxiliary pattern AXP or the connection pattern OPC within FIGS. 6-8 may be applied to the illustrated exemplary embodiment in FIG. 9.

According to the display device 1004 shown in FIG. 9, even though the lower substrate 110-2 includes the driving layer DRV and the pixel electrode PE and the upper substrate 120-2 includes the common electrode CE, opposite to the display device 1000 shown in FIG. 3, the display device 1004 may have a similar function as that of the display device 1000 shown in FIG. 3.

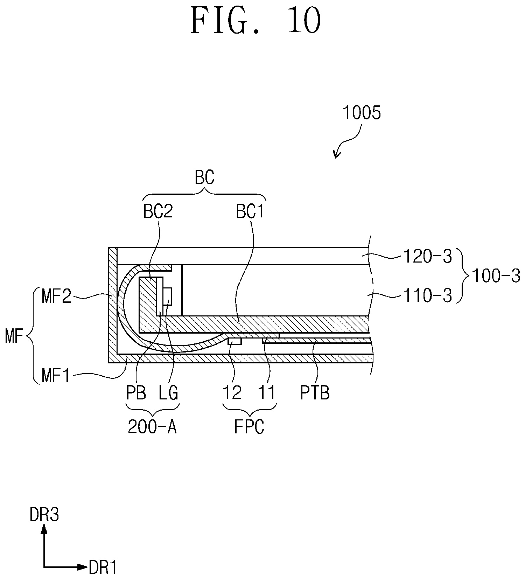

FIG. 10 is a cross-sectional view showing still another exemplary embodiment of a display device 1005 according to the invention.

Referring to FIG. 10, the display device 1005 includes a display panel 100-3, a light source unit 200-A, a bottom chassis BC, a flexible printed circuit board FPC, a printed circuit board PTB and a module frame MF.

The display panel 100-3 may be one of the display panels described with reference to FIGS. 1-9. The display panel 100-3 includes a lower substrate 110-3 and an upper substrate 120-3. The upper substrate 120-3 has an overall size greater than that of the lower substrate 110-3 when viewed in the top plan view. The upper substrate 120-3 may extend further than an outer edge of the lower substrate 110-3, as illustrated in FIG. 10. Since the lower substrate 110-3 and the upper substrate 120-3 are described with reference to FIGS. 1-9, details thereof will be omitted.

The light source unit 200-A has the same structure and function as those elements of the light source unit 200 shown in FIGS. 1 to 3, and thus detailed descriptions of the light source unit 200-A will be omitted.

The bottom chassis BC includes and defines an accommodating space therein. The display panel 100-3 and the light source unit 200-A are accommodated in the accommodating space. The bottom chassis BC includes a bottom portion BC1 and a sidewall portion BC2.

The light source unit 200-A is disposed on the sidewall portion BC2 of the bottom chassis BC. The lower substrate 110-3 is disposed on the bottom portion BC1.

The flexible printed circuit board FPC is attached to the upper substrate 120-3 and bent downward below the bottom chassis BC. The flexible printed circuit board FPC electrically connects the display panel 100-3 and the printed circuit board PTB to each other. The flexible printed circuit board FPC includes a base film 11 and an integrated circuit chip 12 which is formed or disposed on the base film 11.

The printed circuit board PTB is disposed under the bottom portion BC1 of the bottom chassis BC. The printed circuit board PTB generates and/or transmits signals to drive the display panel 100-3. The printed circuit board PTB provides a driving signal to the upper substrate 120-3. The printed circuit board PTB includes a driving substrate (not shown) and a plurality of circuit parts (not shown) mounted on the driving substrate (not shown). The flexible printed circuit board FPC may transmit driving and control signals between the display panel 100-3 and the printed circuit board PTB.

The module frame MF accommodates therein the display panel 100-3, the light source unit 200-A, the bottom chassis BC, the flexible printed circuit board FPC and the printed circuit board PTB.

The module frame MF includes a bottom frame portion MF1 and a sidewall frame portion MF2. The bottom frame portion MF1 has a flat shape. The sidewall frame portion MF2 extends from an edge of the bottom frame portion MF1 in the third direction DR3. The sidewall frame portion MF2 covers a side surface of the upper substrate 120-3.

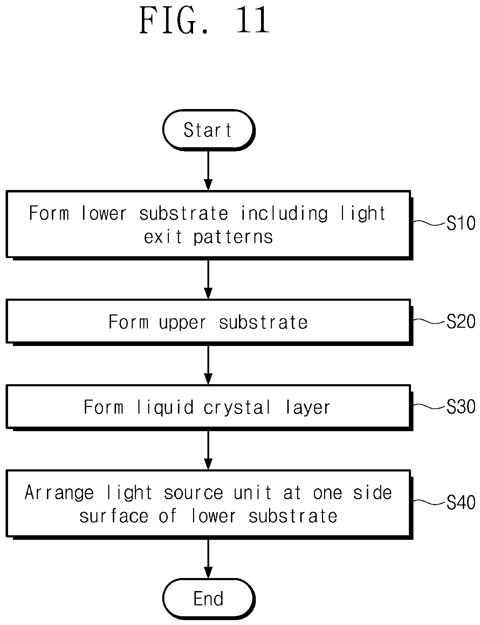

FIG. 11 is a flowchart showing an exemplary embodiment of a manufacturing method of a display device according to the invention.

Referring to FIG. 11, the method of manufacturing the display device includes forming a lower substrate including light exit patterns (S10), forming an upper substrate (S20), forming a liquid crystal layer (S30), and arranging a light source unit at one side surface of the lower substrate (S40).

While the structure of FIG. 3 is used for description in the method of manufacturing the display device, the method may be respectively applied to any of the structures of the upper and lower substrates described herein.

Referring to FIGS. 3 and 11, the forming of the lower substrate (S10) includes forming the light exit patterns OP on the first substrate SB1, forming the first polarization layer PL1 on the light exit patterns OP, and forming the common electrode CE on the first polarization layer PL1. The first polarization layer PL1 may be formed using a deposition process and a patterning process.

The forming of the upper substrate (S20) includes forming the driving layer DRV on the second substrate SB2, forming the pixel electrode PE on the driving layer DRV, and forming the second polarization layer PL2 on the second substrate SB2.

In the forming of the liquid crystal layer (S30), the liquid crystal is provided between the upper substrate 120 and the lower substrate 110. Then, the sealing member SL is formed between the lower substrate 110 and the upper substrate 120 to seal the liquid crystal between the lower substrate 110 and the upper substrate 120. The lower substrate 110 and the upper substrate 120 may be coupled to each other by the sealing member SL.

In the arranging of the light source unit (S40), the light source LG is disposed adjacent to the incident surface S3 of the first substrate SB1.

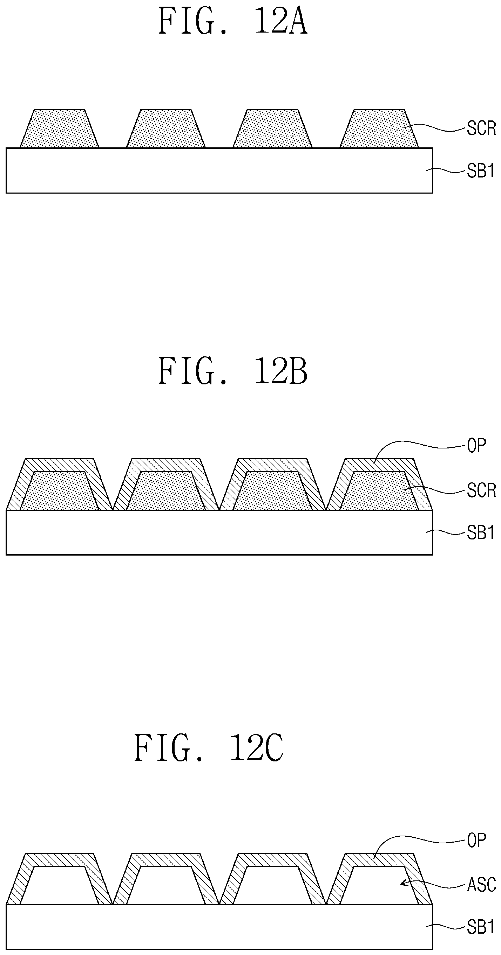

FIGS. 12A to 12C are cross-sectional views of exemplary embodiments of processes of the forming light exit patterns on the first substrate within the forming of the lower substrate (S10).

Referring to FIGS. 3 and 12A, a sacrificial layer SCR is formed on the first substrate SB1. The sacrificial layer SCR is formed by depositing an insulating material and patterning the insulating material using a photolithography process. The sacrificial layer SCR may include convex patterns protruded from an upper surface of the first substrate SB1. Inclined surfaces of the convex patterns may have a lateral inclination angle of from about 60° to about 70° with respect to the upper surface of the first substrate SB1. In a subsequent process, the sacrificial layer SCR is removed to form a first space ASC.

Referring to FIG. 12B, the light exit patterns OP are formed on the sacrificial layer SCR. The light exit patterns OP have substantially the same refractive index as that of the first substrate SB1 and include a transparent material. A shape of the light exit patterns OP corresponds to that of the sacrificial layer SCR. The shape of the light exit patterns OP may be the convex shape.

Referring to FIG. 12C, the sacrificial layer SCR is removed. The first space ASC is formed inside each of the light exit patterns OP by removing the sacrificial layer SCR. The first space ASC may be filled with the air.

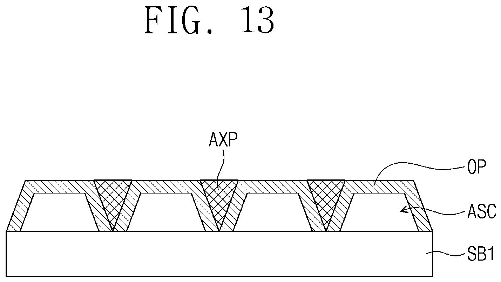

FIG. 13 is a cross-sectional view showing an exemplary embodiment of a process of forming the auxiliary patterns.

The forming of the lower substrate (S10) shown in FIG. 11 may further include forming the auxiliary patterns AXP on the light exit patterns OP.

The auxiliary patterns AXP may be formed between the adjacent inclined portions OP2 of adjacent light exit patterns OP. The auxiliary patterns AXP may have substantially the same refractive index as that of the light exit patterns OP and include a transparent material.

## Claims

1. A display device (1000) comprising:
a lower substrate (110);
an upper substrate (120) facing the lower substrate (110);
a light source (LG) which generates and emits a light toward a side surface (111) of the lower substrate (110); and
an optical medium layer (130) interposed between the lower substrate (111) and the upper substrate (120) and through which the light transmits to generate an image,
wherein:
the lower substrate (110) comprises:
a first substrate (SB1) within which the light travels from the side surface (111) of the lower substrate (110) to exit from an upper surface (S1) of the first substrate (SB1), the first substrate (SB1) comprising an incident side surface (S3) to which the light emitted from the light source (LG) is incident; and
light exit patterns (OP) on the upper surface (S1) of the first substrate (SB1),
wherein each of the light exit patterns (OP) is in contact with the upper surface (S1) of the first substrate (SB1) and respectively defines a first space (ASC) between the light exit pattern (OP)and the upper surface (S1) of the first substrate (SB1), the first space (ASC) being filled with air;
**characterized in that**
the light exit patterns (OP) include a transparent material and have a refractive index equal to or greater than the refractive index of the first substrate (SB1).

2. The display device of claim 1, wherein the first space (ASC) has a trapezoidal shape in a thickness direction of the lower substrate (110).

3. The display device of claim 1 or 2, wherein each of the light exit patterns (OP) comprises:
a flat portion (OP1) substantially parallel to the first substrate (SB1) and spaced apart from the first substrate (SB1) to dispose the first space (ASC) between the flat portion (OP1) and the upper surface (S1) of the first substrate (SB1); and
an inclined portion (OP2) extending inclined from the flat portion (OP1) and toward to the first substrate (SB1), wherein the inclined portion (OP2) is in contact with the upper surface (S1) of the first substrate (SB1).

4. The display device of claim 3, wherein
the light source (LG) is disposed adjacent in a first direction (DR1) to the incident side surface (S3) of the first substrate (SB1), and
the inclined portion (OP2) is provided in a plural number, the inclined portions (OP2) respectively connected to two sides of the flat portion (OP1) which are opposite to each other in the first direction (DR1).

5. The display device of claim 3 or 4, wherein an inner inclination angle respectively formed by the inclined portions (OP2) with the first substrate (SB1) is from about 60° to about 70°.

6. The display device of at least one of claims 3 to 5, wherein the flat portion (OP1) and the inclined portion (OP2) have a same thickness as each other.

7. The display device of at least one of claims 1 to 6, wherein two light exit patterns (OP) disposed adjacent to each other among the light exit patterns defines a second space (BSC) filled with air therebetween.

8. The display device of at least one of claims 1 to 7, wherein
two light exit patterns (OPX1, OPX2) disposed adjacent to each other among the light exit patterns defines a second space (BSC) therebetween, and
the lower substrate (110) further comprises an auxiliary pattern (AXP) disposed in the second space (BSC) defined between the two light exit patterns (OXP1, OXP2) adjacent to each other.

9. The display device of claim 8, wherein each of the light exit patterns (OXP1, OXP2) has substantially a same refractive index as that of the auxiliary pattern (AXP).

10. The display device of at least one of claims 1 to 9, wherein
two light exit patterns (OPX) disposed adjacent to each other among the light exit patterns (OPX) are spaced apart from each other,
each of the adjacent light exit patterns (OPX) spaced apart from each other comprises:
a flat portion (OPX1) substantially parallel to the first substrate (SB1) and spaced apart from the first substrate (SB1) to dispose the first space (ASC) between the flat portion (OPX1) and the upper surface of the first substrate (SB1); and
an inclined portion (OPX2) extending inclined from the flat portion (OPX1) and toward to the first substrate (SB1), the inclined portion (OPX2) in contact with the upper surface of the first substrate (SB1), and
the lower substrate (110) further comprises a connection pattern (OPC) between the adjacent light exit patterns (OPX) spaced apart from each other, wherein the connection pattern (OPC) connects inclined portions of the adjacent light exit patterns to each other and contacts the upper surface of the first substrate (SB1).

11. The display device of claim 10, wherein the inclined portions of the adjacent light exit patterns extend to define the connection pattern between the adjacent light exit patterns (OP) spaced apart from each other.

12. The display device of at least one of claims 1 to 11, wherein the lower substrate (110) further comprises a first polarization layer (PL1) which is disposed on the light exit patterns and linearly polarizes a light incident thereto.

13. The display device (1004) of at least one of claims 1 to 12, wherein
the lower substrate (110-2) further comprises a common electrode (CE) disposed on the first polarization layer (PL), and
the upper substrate (120-2) facing the lower substrate (110-2) with the optical medium layer therebetween comprises:
a second substrate (SB2);
a driving layer disposed on the second substrate (SB2);
a pixel electrode (PE) which is disposed on the driving layer, receives a pixel voltage from the driving layer and generates an electric field, with the common electrode, in the optical medium layer to generate the image; and
a second polarization layer (PL2) which is disposed on the second substrate (SB2) to dispose the second substrate (SB2) between the second polarization layer (PL2) and the pixel electrode (PE) and linearly polarizes a light incident thereto.

14. The display device (1004) of at least one of claims 1 to 13, wherein the upper substrate (120-2) facing the lower substrate (110-2) with the optical medium layer therebetween comprises:
a second substrate (SB2);
a driving layer disposed on the second substrate (SB2);
a pixel electrode (PE) disposed on the driving layer and receiving a pixel voltage from the driving layer;
a common electrode (CE) which is disposed to face the pixel electrode (PE), is insulated from the pixel electrode (PE) and generates an electric field, with the pixel electrode (PE), in the optical medium layer to generate the image; and
a second polarization layer (PL2) which is disposed on the second substrate (SB2) to dispose the second substrate (SB2) between the second polarization layer (PL2) and the pixel electrode (PE) and linearly polarizes a light incident thereto.

## Patentansprüche

1. Anzeigevorrichtung (1000), umfassend:
ein unteres Substrat (110);
ein oberes Substrat (120), das dem unteren Substrat (110) zugewandt ist;
eine Lichtquelle (LG), die ein Licht erzeugt und in Richtung einer Seitenfläche (111) des unteren Substrats (110) emittiert; und
eine Schicht (130) aus einem optischen Medium, die zwischen dem unteren Substrat (111) und dem oberen Substrat (120) liegt und durch die das Licht gesendet wird, um ein Bild zu erzeugen,
wobei:
das untere Substrat (110) Folgendes umfasst:
ein erstes Substrat (SB1), in dem sich das Licht von der Seitenfläche (111) des unteren Substrats (110) derart bewegt, dass es aus einer oberen Fläche (S1) des ersten Substrats (SB1) austritt, wobei das erste Substrat (SB1) eine Einfallsseitenfläche (S3) umfasst, auf die das von der Lichtquelle (LG) emittierte Licht einfällt; und
Lichtaustrittsmuster (OP) an der oberen Fläche (S1) des ersten Substrats (SB1), wobei sich jedes der Lichtaustrittsmuster (OP) in Kontakt mit der oberen Fläche (S1) des ersten Substrats (SB1) befindet und jeweils einen ersten Raum (ASC) zwischen dem Lichtaustrittsmuster (OP) und der oberen Fläche (S1) des ersten Substrats (SB1) definiert, wobei der erste Raum (ASC) mit Luft gefüllt ist;
**dadurch gekennzeichnet, dass**
die Lichtaustrittsmuster (OP) ein transparentes Material beinhalten und einen Brechungsindex aufweisen, der gleich oder größer dem Brechungsindex des ersten Substrats (SB1) ist.

2. Anzeigevorrichtung nach Anspruch 1, wobei der erste Raum (ASC) eine Trapezform in einer Dickenrichtung des unteren Substrats (110) aufweist.

3. Anzeigevorrichtung nach Anspruch 1 oder 2, wobei jedes der Lichtaustrittsmuster (OP) Folgendes umfasst:
einen flachen Abschnitt (OP1), der im Wesentlichen parallel zu dem ersten Substrat (SB1) verläuft und von dem ersten Substrat (SB1) derart beabstandet ist, dass der erste Raum (ASC) zwischen dem flachen Abschnitt (OP1) und der oberen Fläche (S1) des ersten Substrats (SB1) angeordnet ist; und
einen geneigten Abschnitt (OP2), der sich von dem flachen Abschnitt (OP1) ausgehend und in Richtung des ersten Substrats (SB1) geneigt erstreckt, wobei sich der geneigte Abschnitt (OP2) in Kontakt mit der oberen Fläche (S1) des ersten Substrat (SB1) befindet.

4. Anzeigevorrichtung nach Anspruch 3, wobei
die Lichtquelle (LG) in einer ersten Richtung (DR1) an die Einfallsseitenfläche (S3) des ersten Substrats (SB1) angrenzend angeordnet ist, und
der geneigte Abschnitt (OP2) in einer Vielzahl bereitgestellt ist, wobei die geneigten Abschnitte (OP2) jeweils mit zwei Seiten des flachen Abschnitts (OP1) verbunden sind, die einander in der ersten Richtung (DR1) gegenüberliegen.

5. Anzeigevorrichtung nach Anspruch 3 oder 4, wobei ein innerer Neigungswinkel, der jeweils durch die geneigten Abschnitte (OP2) mit dem ersten Substrat (SB1) gebildet ist, in einem Bereich von etwa 60 ° bis etwa 70 ° liegt.

6. Anzeigevorrichtung nach mindestens einem der Ansprüche 3 bis 5, wobei der flache Abschnitt (OP1) und der geneigte Abschnitt (OP2) die gleiche Dicke aufweisen.

7. Anzeigevorrichtung nach mindestens einem der Ansprüche 1 bis 6, wobei zwei Lichtaustrittsmuster (OP), die unter den Lichtaustrittsmustern aneinander angrenzend angeordnet sind, einen zweiten Raum (BSC) definieren, der dazwischen mit Luft gefüllt ist.

8. Anzeigevorrichtung nach mindestens einem der Ansprüche 1 bis 7, wobei zwei Lichtaustrittsmuster (OPX1, OPX2), die entlang der Lichtaustrittsmuster aneinander angrenzend angeordnet sind, einen zweiten Raum (BSC) dazwischen definieren, und
das untere Substrat (110) ferner ein Hilfsmuster (AXP) umfasst, das in dem zweiten Raum (BSC) angeordnet ist, der zwischen den zwei Lichtaustrittsmustern (OXP1, OXP2) definiert ist, die aneinander angrenzen.

9. Anzeigevorrichtung nach Ansprüchen 8, wobei jedes der Lichtaustrittsmuster (OXP1, OXP2) im Wesentlichen den gleichen Brechungsindex aufweist wie den des Hilfsmusters (AXP).

10. Anzeigevorrichtung nach mindestens einem der Anspruche 1 bis 9, wobei zwei Lichtaustrittsmuster (OPX), die entlang der Lichtaustrittsmuster (OPX) aneinander angrenzend angeordnet sind, voneinander beabstandet sind, wobei jedes der angrenzenden Lichtaustrittsmuster (OPX), die voneinander beabstandet sind, Folgendes umfasst:
einen flachen Abschnitt (OPX1), der im Wesentlichen parallel zu dem ersten Substrat (SB1) verläuft und von dem ersten Substrat (SB1) derart beabstandet ist, das der erste Raum (ASC) zwischen dem flachen Abschnitt (OPX1) und der oberen Fläche des ersten Substrats (SB1) angeordnet ist; und
einen geneigten Abschnitt (OPX2), der sich von dem ersten Abschnitt (OPX1) ausgehend und in Richtung des ersten Substrats (SB1) geneigt erstreckt, wobei sich der geneigte Abschnitt (OPX2) in Kontakt mit der oberen Fläche des ersten Substrats (SB1) befindet, und
wobei das untere Substrat (110) ein Verbindungsmuster (OPC) zwischen den angrenzenden Lichtaustrittsmustern (OPX), die voneinander beabstandet sind, umfasst, wobei das Verbindungsmuster (OPC) geneigte Abschnitte der angrenzenden Lichtaustrittsmuster miteinander verbindet und sich in Kontakt mit der oberen Fläche des ersten Substrats (SB1) befindet.

11. Anzeigevorrichtung nach Anspruch 10, wobei sich die geneigten Abschnitte der angrenzenden Lichtaustrittsmuster derart erstrecken, dass sie das Verbindungsmuster zwischen den angrenzenden Lichtaustrittsmustern (OP) definieren, die voneinander beabstandet sind.

12. Anzeigevorrichtung nach mindestens einem der Ansprüche 1 bis 11, wobei das untere Substrat (110) ferner eine erste Polarisierungsschicht (PL1) umfasst, die auf dem Lichtaustrittsmuster angeordnet ist und ein darauf einfallendes Licht linear polarisiert.

13. Anzeigevorrichtung (1004) nach mindestens einem der Ansprüche 1 bis 12, wobei das untere Substrat (110-2) ferner eine gemeinsame Elektrode (CE) umfasst, die auf der ersten Polarisierungsschicht (PL) angeordnet ist, und
das obere Substrat (120-2), das dem unteren Substrat (110-2) mit der Schicht aus dem optischen Medium dazwischen zugewandt ist, Folgendes umfasst:
ein zweites Substrat (SB2);
eine Antriebsschicht, die auf dem zweiten Substrat (SB2) angeordnet ist;
eine Pixelelektrode (PE), die auf der Antriebsschicht angeordnet ist, empfängt eine Pixelspannung von der Antriebsschicht und erzeugt ein elektrisches Feld mit der gemeinsamen Elektrode in der Schicht aus dem optischen Medium, um das Bild zu erzeugen; und
eine zweite Polarisierungsschicht (PL2), die auf dem zweiten Substrat (SB2) derart angeordnet ist, dass das zweite Substrat (SB2) zwischen der zweiten Polarisierungsschicht (PL2) und der Pixelelektrode (PE) angeordnet ist, und linear ein darauf einfallendes Licht polarisiert.

14. Anzeigevorrichtung (1004) nach mindestens einem der Ansprüche 1 bis 13, wobei das obere Substrat (120-2), das dem unteren Substrat (110-2) mit der Schicht aus optischem Medium dazwischen zugewandt ist, Folgendes umfasst:
ein zweites Substrat (SB2);
eine Antriebsschicht, die auf dem zweiten Substrat (SB2) angeordnet ist;
eine Pixelelektrode (PE), die auf der Antriebsschicht angeordnet ist und eine Pixelspannung von der Antriebsschicht empfängt,
eine gemeinsame Elektrode (CE), die derart angeordnet ist, dass sie der Pixelelektrode (PE) zugewandt ist, ist gegen die Pixelelektrode (PE) isoliert und erzeugt ein elektrisches Feld, wobei sich die Pixelelektrode (PE) in der Schicht aus dem optischen Medium befindet, um das Bild zu erzeugen; und
eine zweite Polarisierungsschicht (PL2), die auf dem zweiten Substrat (SB2) derart angeordnet ist, dass das zweite Substrat (SB2) zwischen der zweiten Polarisierungsschicht (PL2) und der Pixelelektrode (PE) angeordnet ist und linear ein darauf einfallendes Licht polarisiert.

## Revendications

1. Dispositif d'affichage (1000) comprenant :
un substrat inférieur (110) ;
un substrat supérieur (120) faisant face au substrat inférieur (110) ;
une source lumineuse (LG) qui génère une lumière et l'émet vers une surface latérale (111) du substrat inférieur (110) et
une couche de support optique (130) interposée entre le substrat inférieur (111) et le substrat supérieur (120), à travers laquelle la lumière est transmise pour produire une image,
dans lequel :
le substrat inférieur (110) comprend :
un premier substrat (SB1) dans lequel la lumière se déplace depuis la surface latérale (111) du substrat inférieur (110) pour sortir d'une surface supérieure (S1) du premier substrat (SB1), le premier substrat (SB1) comprenant une surface latérale d'incidence (S3) sur laquelle la lumière émise par la source lumineuse (LG) est incidente, et
des motifs de sortie de la lumière (OP) sur la surface supérieure (S1) du premier substrat (SB1),
chacun des motifs de sortie de la lumière (OP) étant en contact avec la surface supérieure (S1) du premier substrat (SB1) et définissant respectivement un premier espace (ASC) entre le motif de sortie de la lumière (OP) et la surface supérieure (51) du premier substrat (SB1), le premier espace (ASC) étant rempli d'air ;
**caractérisé en ce que** les motifs de sortie de la lumière (OP) se composent d'un matériau transparent et ont un indice de réfraction égal ou supérieur à l'indice de réfraction du premier substrat (SB1).

2. Indice de réfraction selon la revendication 1, dans lequel le premier espace (ASC) a une forme trapézoïdale dans le sens de l'épaisseur du substrat inférieur (110).

3. Indice de réfraction selon la revendication 1 ou 2, dans lequel chacun des motifs de sortie de la lumière (OP) comprend :
une partie plate (OP1) sensiblement parallèle au premier substrat (SB1) et espacée du premier substrat (SB1) de façon à disposer le premier espace (ASC) entre la partie plate (OP1) et la surface supérieure (S1) du premier substrat (SB1) ; et
une partie inclinée (OP2) qui s'étend en biais à partir de la partie plate (OP1) et vers le premier substrat (SB1), la partie inclinée (OP2) étant en contact avec la surface supérieure (S1) du premier substrat (SB1).

4. Dispositif d'affichage selon la revendication 3, dans lequel
la source lumineuse (LG) est adjacente dans une première direction (DR1) à la surface latérale d'incidence (S3) du premier substrat (SB1), et
la partie inclinée (OP2) est prévue en un nombre pluriel, les parties
inclinées (OP2) étant reliées respectivement à deux cotés de la partie plate (OP1) opposés l'un à l'autre dans la première direction (DR1).

5. Indice de réfraction selon la revendication 3 ou 4, dans lequel un angle d'inclinaison intérieur formé respectivement par les parties inclinées (OP2) avec le premier substrat (SB1) est compris entre environ 60° et environ 70°.

6. Dispositif d'affichage selon l'une au moins des revendications 3 à 5, dans lequel la partie plate (OP1) et la partie inclinée (OP2) ont la même épaisseur l'une que l'autre.

7. Dispositif d'affichage selon l'une au moins des revendications 1 à 6, dans lequel deux schémas de sortie de la lumière (OP) adjacents l'un à l'autre parmi les motifs de sortie de la lumière définissent entre eux un deuxième espace (BSC) rempli d'air.

8. Dispositif d'affichage selon l'une au moins des revendications 1 à 7, dans lequel deux motifs de sortie de la lumière (OPX1, OPX2) adjacents l'un à l'autre parmi les motifs de sortie de la lumière définissent entre eux un deuxième
espace (BSC) et
le substrat inférieur (110) comprend en outre un motif auxiliaire (AXP) disposé dans le deuxième espace (BSC) défini entre les deux motifs de sortie de la lumière (OXP1, OXP2) adjacents l'un à l'autre.

9. Dispositif d'affichage selon la revendication 8, dans lequel chacun des motifs de sortie de la lumière (OXP1, OXP2) a sensiblement le même indice de réfraction que le motif auxiliaire (AXP).

10. Dispositif d'affichage selon l'une au moins des revendications 1 à 9, dans lequel deux motifs de sortie de la lumière (OPX) adjacents l'un à l'autre parmi les motifs de sortie de la lumière (OPX) sont espacés l'un de l'autre,
chacun des motifs de sortie de la lumière (OPX) adjacents espacés l'un de l'autre comprend :
une partie plate (OPX1) sensiblement parallèle au premier substrat (SB1) et espacée du premier substrat (SB1) de façon à disposer le premier espace (ASC) entre la partie plate (OPX1) et la surface supérieure du premier substrat (SB1) ; et
une partie inclinée (OPX2) qui s'étend en biais à partir de la partie plate (OPX1) et vers le premier substrat (SB1), la partie inclinée (OPX2) étant en contact avec la surface supérieure du premier substrat (SB1), et
le substrat inférieur (110) comprend en outre un motif de connexion (OPC) entre les motifs de sortie de la lumière (OPX) adjacents espacés l'un de l'autre, le motif de connexion (OPC) connectant les parties inclinées des motifs de sortie de la lumière adjacents entre elles et venant en contact avec la surface supérieure du premier substrat (SB1).

11. Dispositif d'affichage selon la revendication 10, dans lequel les parties inclinées des motifs de sortie de la lumière adjacents s'étendent de façon à définir le motif de connexion entre les motifs de sortie de la lumière (OP) adjacents espacés l'un de l'autre.

12. Dispositif d'affichage selon l'une au moins des revendications 1 à 11, dans lequel le substrat inférieur (110) comprend une première couche de polarisation (PL1) qui est disposée sur les motifs de sortie de la lumière et qui polarise de façon linéaire une lumière incidente sur ceux-ci.

13. Dispositif d'affichage (1004) selon l'une au moins des revendications 1 à 12, dans lequel
le substrat inférieur (110-2) comprend en outre une électrode commune (CE) disposée sur la première couche de polarisation (PL), et
le substrat supérieur (120-2) situé face au substrat inférieur (110-2) avec la couche de support optique entre eux comprend :
un deuxième substrat (SB2) ;
une couche d'excitation disposée sur le deuxième substrat (SB2) ;
une électrode de pixel (PE) disposée sur la couche d'excitation, qui reçoit une tension de pixel de la couche d'excitation et génère, avec l'électrode commune, un champ électrique dans la couche de support optique afin de produire l'image ; et
une deuxième couche de polarisation (PL2) disposée sur le deuxième
substrat (SB2) de façon à disposer le deuxième substrat (SB2) entre la deuxième couche de polarisation (PL2) et l'électrode de pixel (PE) et qui polarise de façon linéaire une lumière incidente sur celui-ci.

14. Dispositif d'affichage (1004) selon l'une au moins des revendications 1 à 13, dans lequel le substrat supérieur (120-2) faisant face au substrat inférieur (110-2) avec la couche de support optique entre eux comprend :
un deuxième substrat (SB2) ;
une couche d'excitation disposée sur le deuxième substrat (SB2) ;
une électrode de pixel (PE) disposée sur la couche d'excitation et qui reçoit une tension de pixel de la couche d'excitation ;
une électrode commune (CE) qui est disposée face à l'électrode de pixel (PE), est isolée de l'électrode de pixel (PE) et produit, avec l'électrode de pixel (PE), un champ électrique dans la couche de support optique pour produire l'image ; et
une deuxième couche de polarisation (PL2) disposée sur le deuxième
substrat (SB2) de façon à disposer le deuxième substrat (SB2) entre la deuxième couche de polarisation (PL2) et l'électrode de pixel (PE) et qui polarise de façon linéaire une lumière incidente sur celui-ci.
